# EUROPEAN PATENT APPLICATION

(11) **EP 4 509 879 A1**
(43) Date of publication of application: **19.02.2025**
(21) Application number: 23816217.6
(22) Date of filing: 14.04.2023
(51) Int. Cl.: G01S 19/40, G01S 19/42

(54) **ELECTRONIC APPARATUS AND POSITIONING METHOD FOR MOVING BODY BY SAME**

(30) Priority: 30.05.2022 KR 20220066359
(71) Applicant: Samsung Electronics Co., Ltd., Suwon-si, Gyeonggi-do 16677 (KR)
(72) Inventor: BAEK, Houn, Suwon-si, Gyeonggi-do 16677 (KR); KIM, Jongwoo, Suwon-si, Gyeonggi-do 16677 (KR); LEE, Dayoung, Suwon-si, Gyeonggi-do 16677 (KR); JUNG, Sungsik, Suwon-si, Gyeonggi-do 16677 (KR); HEO, Young, Suwon-si, Gyeonggi-do 16677 (KR)
(74) Representative: Gulde & Partner
(86) International application number: PCT/KR2023/005074
(87) International publication number: WO 2023/234551

(57) **Abstract**

A method according to an embodiment may include: selecting a first correction method from among a plurality of correction methods assigned priorities; determining a current position of the moving object by using a global navigation satellite system (GNSS) signal and first correction data corresponding to the first correction method; storing, when an event situation related to the first correction method has occurred, log information including position information about a position where the event situation has occurred; changing, when the current position of the moving object corresponds to the position information included in the log information after the log information is stored, a priority assigned to at least one of the plurality of correction methods; selecting, based on the changed priority, a second correction method from among the plurality of correction methods; and determining the current position of the moving object by using second correction data corresponding to the second correction method and the GNSS signal.

## Description

### Technical Field

The disclosure relates to a positioning field, and more particularly, to an electronic apparatus and method for measuring a position of a moving object based on a global navigation satellite system (GNSS) signal and correction data.

### Background Art

With recent technological advancements, the importance of GNSS technology for realizing unmanned operation of moving bodies, such as vehicles or drones, is increasing. The GNSS technology focuses on maximizing the precision of positioning by utilizing high-quality satellite signals (or GNSS signals) and various correction data.

There are two main methods for correcting GNSS signals. The first method is a State Space Representation (SSR) correction method, which models error components on the transmission path of satellite signals to generate correction data. The second method is an Observation Space Representation (OSR) method, which uses observed error information as correction data.

Unlike the SSR correction method, the OSR correction method has a disadvantage in that precision decreases as the distance between a reference station and a moving object increases. In the case of the OSR correction method, an estimate value of an observation error is calculated depending on the distance based on an observation error of the reference station and is transmitted to the moving object. Therefore, the longer the distance between the reference station and the moving object, the more inaccurate the estimate value becomes. Therefore, in order to improve the precision of the OSR correction method, many reference stations should be installed in appropriate places.

Additionally, the SSR correction method and the OSR correction method differ in the size of correction data. Because the size of correction data according to the SSR correction method is smaller than the size of correction data according to the OSR correction method, the burden on communication capacity can be lessened.

To transmit correction data to a moving object, various communication methods can be used. For example, correction data can be transmitted to a moving object through a Digital Multimedia Broadcasting (DMB) communication method, a 5^{th} Generation (5G) communication method, a satellite communication method, a Vehicle to Everything (V2X) communication method, or a Frequency Modulation (FM) radio communication method.

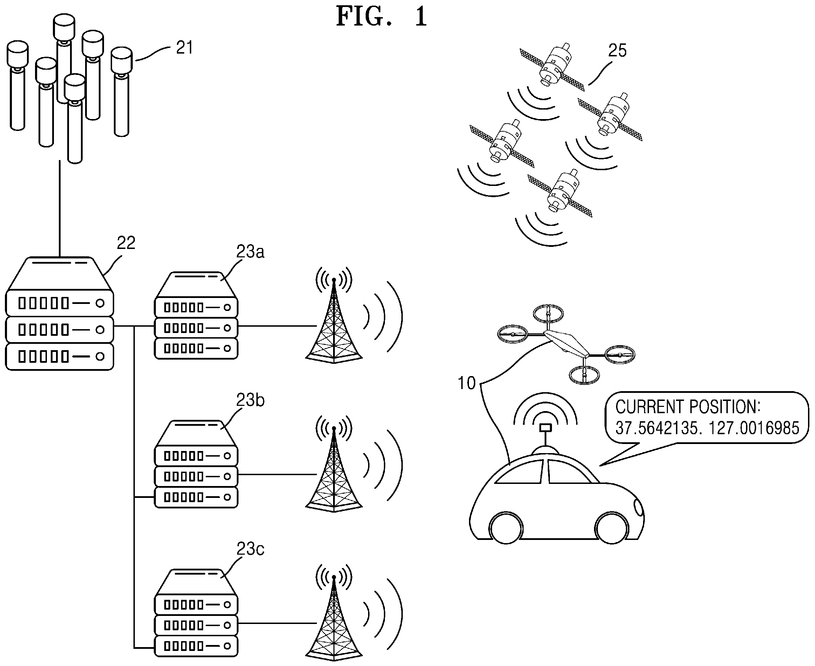

An implementation example of the GNSS technology will be briefly described with reference to FIG. 1.

Referring to FIG. 1, reference stations 21 installed in various places obtain information for generating correction data, and a main server 22 generates correction data by using the information obtained by the reference stations 21.

One or more distribution servers 23a, 23b, and 23c transmit the correction data received from the main server 22 to a moving object 10 according to various communication methods. The one or more distribution servers 23a, 23b, and 23c transmit the correction data through a DMB communication method, a 5G communication method, a satellite communication method, a V2X communication method, or a FM radio communication method, as described above.

The moving object 10 measures its own position with high precision by using GNSS signals received from a satellite 25 and the correction data received from the one or more distribution servers 23a, 23b, and 23c.

There are several methods for generating correction data and several communication methods for transmitting correction data, as described above, and the speed and precision of positioning depend on which correction method and which communication method are used to measure the position of the moving object 10. Therefore, a need to assign priorities to various correction methods and measure the position of the moving object 10 while switching between the correction methods according to the priorities is increasing.

### Disclosure

### Technical Solution

According to an embodiment, a method of determining a current position of a moving object, performed by an electronic apparatus 200, may include selecting a first correction method from among a plurality of correction methods assigned priorities.

According to an embodiment, the method of determining the current position of the moving object, performed by the electronic apparatus 200, may include determining the current position of the moving object by using a global navigation satellite system (GNSS) signal and first correction data corresponding to the first correction method.

According to an embodiment, the method of determining the current position of the moving object, performed by the electronic apparatus 200, may include storing, when an event situation related to the first correction method has occurred, log information including position information about a position where the event situation has occurred.

According to an embodiment, the method of determining the current position of the moving object, performed by the electronic apparatus 200, may include changing, when the current position of the moving object corresponds to the position information included in the log information after the log information is stored, a priority assigned to at least one of the plurality of correction methods.

According to an embodiment, the method of determining the current position of the moving object, performed by the electronic apparatus 200, may include selecting, based on the changed priority, a second correction method from among the plurality of correction methods.

According to an embodiment, the method of determining the current position of the moving object, performed by the electronic apparatus 200, may include determining the current position of the moving object by using second correction data corresponding to the second correction method and the GNSS signal.

In an embodiment, a priority assigned to the first correction method before the priority changes may be higher than a priority assigned to the second correction method, and a priority assigned to the first correction method according to the change of the priority may be lower than a priority assigned to the second correction method.

According to an embodiment, an electronic apparatus 200 for determining a current position of a moving object may include a global navigation satellite system module 270 configured to determine a current position of the moving object by using a GNSS signal and correction data; one or more memories 230 storing at least one instruction; and one or more processors configured to operate according to the at least one instruction.

In an embodiment, the one or more processors may be configured to select a first correction method from among a plurality of correction methods assigned priorities.

In an embodiment, the one or more processors may be configured to provide first correction data corresponding to the first correction method to the GNSS module 270.

In an embodiment, the one or more processors may be configured to store, when an event situation related to the first correction method has occurred, log information including position information about a position where the event situation has occurred in the one or more memories 230.

In an embodiment, the one or more processors may be configured to change, when the current position of the moving object corresponds to the position information included in the log information after the log information is stored, a priority assigned to at least one of the plurality of correction methods.

In an embodiment, the one or more processors may be configured to select, based on the changed priority, a second correction method from among the plurality of correction methods.

In an embodiment, the one or more processors may be configured to provide second correction data corresponding to the second correction method to the GNSS module 270.

In an embodiment, the GNSS module 270 may be configured to determine the current position of the moving object by using the GNSS signal and the first correction data or the second correction data provided from the one or more processors.

### Description of Drawings

FIG. 1 shows an implementation example of global navigation satellite system (GNSS) technology.
FIG. 2 is a block diagram showing a configuration of an electronic apparatus according to an embodiment.
FIG. 3 is a table showing priorities assigned to a plurality of correction methods, according to an embodiment.
FIG. 4 is a view of an embodiment for describing a process of switching correction methods.
FIG. 5 is a table showing required degrees of precision of functions that are executable on a moving object.
FIG. 6 is a view of an embodiment illustrating a situation in which a correction method is switched while a moving object travels.
FIG. 7 shows log information according to an embodiment.
FIG. 8 is a view for describing a method of changing priorities of correction methods when an event situation according to an embodiment corresponds to a case in which 5^{th} Generation (5G) communication is unavailable.
FIG. 9 is a view for describing a method of changing priorities of correction methods when an event situation according to an embodiment corresponds to a case in which Vehicle to Everything (V2X) communication is unavailable.
FIG. 10 is a view for describing a method of changing priorities of correction methods when an event situation according to an embodiment corresponds to a case in which an intensity of a GNSS signal has been reduced.
FIG. 11 is a view for describing a method of changing priorities of correction methods by considering a required degree of precision of a function executed on a moving object, according to an embodiment.
FIG. 12 is a view for describing a method of changing priorities of correction methods by considering a required degree of precision of a function executed on a moving object, according to an embodiment.
FIG. 13 is a view of an embodiment showing event areas where priorities of a plurality of correction methods need to change.
FIG. 14 is a flowchart for describing a method of determining a position of a moving object, according to an embodiment.
FIG. 15 is a view for describing an operation that is performed by using artificial intelligence (Al) technology in an embodiment.
FIG. 16 is a view, according to an embodiment, showing an electronic apparatus installed in a moving object and a server.
FIG. 17 shows a server, and an electronic apparatus that operates by interworking with the server.

### Mode for Invention

As the disclosure allows for various changes and numerous examples, specific embodiments will be illustrated in the drawings and described in detail in the detailed description. However, this is not intended to limit the embodiment forms of the disclosure, and it should be understood that the disclosure includes all changes, equivalents, and substitutes included in the concepts and technical scopes of various embodiments.

In the description of embodiments, detailed explanations of related known art are omitted when it is deemed that they may unnecessarily obscure the gist of the disclosure. Also, numbers (for example, a first, a second, and the like) used in the description of the disclosure are merely identifier codes for distinguishing one component from another.

Throughout the disclosure, the expression "at least one of a, b or c" indicates "a", "b", "c", "a and b", "a and c", "b and c", "all of a, b, and c", or variations thereof.

Also, in the disclosure, it should be understood that when one component is "connected" or "coupled" to another component, the one component may be directly connected or coupled to the other component, but may alternatively be connected or coupled to the other component with an intervening component therebetween, unless specified otherwise.

In the disclosure, regarding a component represented as a "portion (unit)" or a "module", two or more components may be combined into one component or one component may be divided into two or more components according to subdivided functions. In addition, each component described hereinafter may additionally perform some or all of functions performed by another component, in addition to main functions of itself, and some of the main functions of each component may be performed entirely by another component.

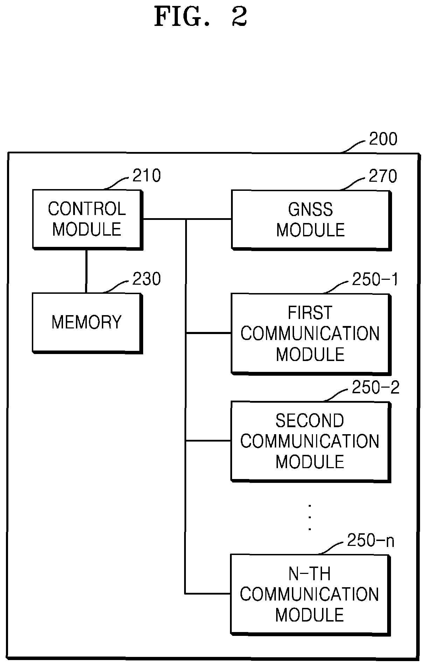

Hereinafter, an operation of an electronic apparatus according to an embodiment will be described with reference to FIGS. 2 to 17.

FIG. 2 is a block diagram showing a configuration of an electronic apparatus 200 according to an embodiment.

Referring to FIG. 2, the electronic apparatus 200 may include a control module 210, one or more memories (hereinafter, memory) 230, a plurality of communication modules 250-1, 250-2, ..., 250-n, and a global navigation satellite system (GNSS) module 270.

The control module 210 may be implemented as one or more processors. The control module 210 may control operations of the memory 230, the plurality of communication modules 250-1, 250-2, ..., 250-n, and the GNSS module 270. The control module 210 may operate according to one or more instructions stored in the memory 230.

The electronic apparatus 200 may be installed in a moving object. In an embodiment, the moving object may include various kinds of mobile machines, such as a vehicle, a drone, and an electric bike.

The control module 210 may select a correction method that is to be used to measure a position of the moving object from among a plurality of correction methods according to priorities assigned to the plurality of correction methods.

The plurality of correction methods and the priorities assigned thereto may be determined from information about an area where the moving object is located. More specifically, the control module 210 may identify an area where the moving object is located, and determine a plurality of correction methods that are available in the identified area. Also, the control module 210 may determine priorities of the plurality of correction methods that are available.

The priorities may have been assigned in advance to the plurality of correction methods by an external device, or the control module 210 may assign the priorities to the plurality of correction methods.

In an embodiment, to identify the area where the moving object is located, the control module 210 may receive position information of the moving object from the GNSS module 270. Because a correction method has not yet been selected, the GNSS module 270 may determine a position of the moving object based on a GNSS signal and transfer information about the determined position to the control module 210.

In another embodiment, the control module 210 may obtain area information of the moving object, stored in the memory 230. Herein, the area information of the moving object may correspond to an area where the moving object has been sold and/or manufactured.

The control module 210 may change priorities assigned to at least some of the plurality of correction methods in consideration of pre-stored log information, and select a correction method that is to be used to measure a position of the moving object according to the changed priorities, which will be described below.

To store log information, the control module 210 may determine whether an event situation has occurred during a positioning process by a specific correction method, and store, upon occurrence of an event situation, log information related to the event situation in the memory 230.

The event situation may correspond to a situation in which selecting the specific correction method based on the priorities assigned to the plurality of correction methods is inefficient. In other words, a case in which a position of the moving object cannot be measured quickly and accurately based on priorities initially assigned to the plurality of correction methods may correspond to an event situation.

The control module 210 may have stored a case corresponding to an event situation in advance, and, when an event situation occurs during a positioning process, the control module 210 may store log information related to the event situation. Also, the control module 210 may change, when a position of the moving object corresponds to a position where an event situation has occurred, a priority assigned to at least one of the plurality of correction methods based on the log information.

According to an embodiment, because a priority assigned to at least one of the plurality of correction methods may be changed adaptively according to log information and a correction method with most excellent efficiency may be selected according to the changed priority, a position of the moving object could be measured quickly and accurately.

Event situations after a first correction method is selected based on priorities from among the plurality of correction methods may include cases exemplified below.
i) Case in which after the first correction method is selected, the first correction method is switched to a second correction.
ii) Case in which a communication method used to receive first correction data corresponding to the first correction method is unavailable (the communication method may be determined to be unavailable when transmission/reception of a communication signal according to the communication method is interrupted or when an intensity of the communication signal is reduced to be less than or equal to a preset value).
iii) Case in which a current position of the moving object is not determined based on the first correction method for a preset time (that is, case in which a floating state is maintained for the preset time).
iv) Case in which an intensity of a GNSS signal is reduced to be less than or equal to a preset value.
v) Case in which reception of a GNSS signal is interrupted.
vi) Case in which a function requiring a higher degree of precision than that of the first correction method is executed on the moving object.
vii) Case in which there is a correction method assigned a higher priority than that assigned to the first correction method.

According to occurrence of at least one of the above-exemplified cases, the control module 210 may store log information related to the case occurred in the memory 230.

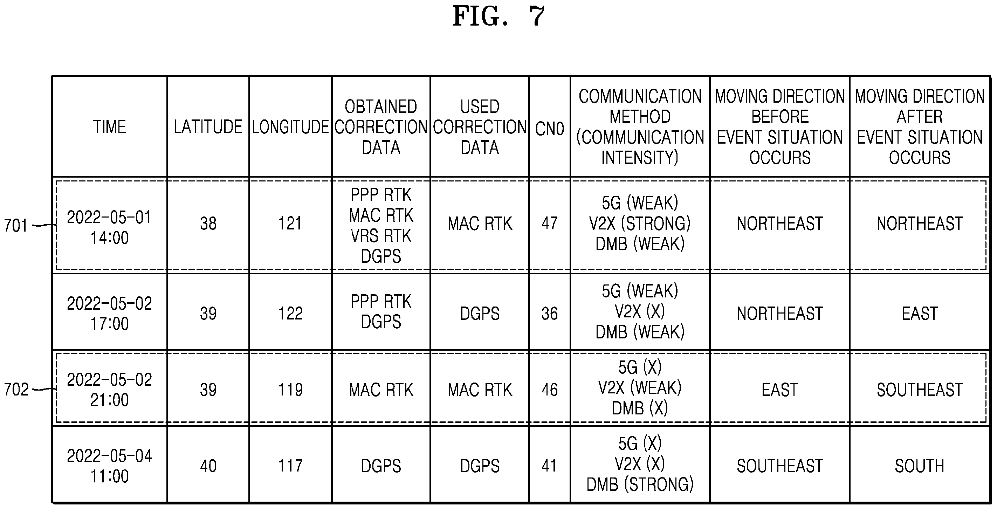

Log information that is stored in the memory 230 will be described with reference to FIG. 7, below.

Each of the plurality of communication modules 250-1, 250-2, ..., 250-n may transmit/receive data to/from an external apparatus according to a preset communication method. The plurality of communication modules 250-1, 250-2, ..., 250-n may use different kinds of communication methods. For example, a first communication module 250-1 may communicate according to a 5^{th} Generation (5G) communication method, and a second communication module 250-2 may communicate according to a Digital Multimedia Broadcasting (DMB) communication method. Also, a n-th communication module 250-n may communicate according to Vehicle to Everything (V2X) communication method.

In an embodiment, a single communication module, instead of the plurality of communication modules 250-1, 250-2, ..., 250-n shown in FIG. 2, may transmit/receive data to/from an external apparatus according to a plurality of communication methods.

The plurality of communication modules 250-1, 250-2, ..., 250-n may receive correction data from an external apparatus according to a preset communication method and provide the correction data to the control module 210. The control module 210 may provide, to the GNSS module 270, correction data corresponding to a correction method selected based on priorities among one or more pieces of correction data received from the plurality of communication modules 250-1, 250-2, ..., 250-n.

The GNSS module 270 may determine a current position of the moving object by using a GNSS signal received from a satellite and the correction data provided from the control module 210. Herein, the current position of the moving object may be expressed by latitude and longitude, or an address. However, there may be various methods of expressing the current location of the moving object.

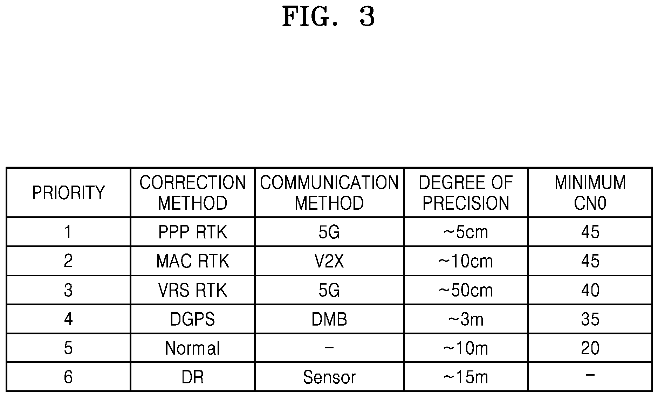

FIG. 3 is a table showing priorities assigned to a plurality of correction methods according to an embodiment.

In an embodiment, the control module 210 may determine a plurality of available correction methods and priorities thereof based on information about an area where a moving object is located.

As shown in FIG. 3, at least one of a communication method, a degree of precision, and minimum Carrier to Noise Power Density (CN0) may be determined to correspond to each correction method.

For example, in the case of PPK RTK, it is confirmed that a priority is a first rank, 5G communication is used to receive correction data, a degree of precision is less than or equal to 5 cm, and minimum CN0 is 45.

CN0 represents a signal-to-noise intensity ratio of a GNSS signal, and may be referred to as an intensity of a GNSS signal hereinafter.

Also, in the case of MAC RTK, it is confirmed that a priority is a second rank, V2X communication is used to receive correction data, a degree of precision is less than or equal to 10 cm, and minimum CN0 is 45.

In an embodiment, priorities of the plurality of correction methods may be assigned by the control module 210. For example, the control module 210 may assign a higher priority to a correction method having a higher degree of precision. Herein, a higher degree of precision means a smaller error of positioning. As shown in FIG. 3, in the case in which PPP RTK has an error that is less than or equal to 5 cm and MAC RTK has an error below 10 cm, a degree of precision of PPP RTK may be said to be higher than a degree of precision of MAC RTK.

As another example, the control module 210 may assign a higher priority to a correction method having greater minimum CN0.

In another embodiment, priorities of the plurality of correction methods may have been assigned in advance by an external apparatus, for example, by an external server.

The correction methods shown in FIG. 3 and the priorities assigned thereto may be used in the following descriptions about embodiments.

Hereinafter, the correction methods shown in FIG. 3 will be briefly described.

### i) DGPS (Differential GPS)

The DGPS may be a method in which a reference station (or a base station) processes GNSS observation values by using differences between correction methods and provides a correction value obtained as the processed result to a moving object. A reference station among several reference stations may provide the correction value to the moving object. The DGPS may have a disadvantage that a positioning error increases depending on a distance between the moving object and the reference station.

### ii) SBAS (Satellite Based Augmentation System)

The SBAS may be an improved method for application to a wider area by improving the disadvantage of the DGPS. Unlike the DGPS, detailed information about factors causing errors may be provided to a moving object. GNSS positioning errors may be processed in a central processing center and the processed result may be transmitted via a geostationary satellite. The SBAS may have a degree of precision within about 3 m.

### iii) RTK (Real Time Kinetic)

The RTK may be a method of using a carrier wave, unlike the DPGS, and a degree of precision may be reduced to several cm. The RTK may have a disadvantage that a degree of precision decreases as a moving object moves away from a reference station.

### iv) NRTK (Network RTK)

To address an error due to a distance between a moving object and a base station in RTK, correction data may be calculated in a network manner. Information may be collected from a plurality of reference stations around a moving object, and correction data may be calculated by comprehensively using the collected information.

### v) Virtual Reference System (VRS) based RTK

A server may calculate correction data by using information observed in a plurality of reference stations. Because a task of calculating correction data depends on the server, a burden on the server may increase.

### vi) Flachen Korrektur parameter (FKP) based RTK and Master Auxiliary Concept (MAC) based RTK

A correction area may be selected based on a user's approximate position and correction data suitable for the corresponding area may be calculated. By using a one-way communication method, a burden on the server may be reduced.

### vii) Precise Point Positioning (PPP) RTK method

The PPP RTK, which is a next-generation high-precision positioning method, may provide more diverse and precise correction data compared to the SBAS.

'Normal' among the correction methods shown in FIG. 3 may be a method of measuring a position by using only a GNSS signal without correction data, and 'DR' may be a method of measuring a position based on a sensor installed in a moving object. Because no correction data is used, it is confirmed that a degree of precision is significantly low compared to the other correction methods.

The control module 210 may select a correction method with a preset priority from among the plurality of correction methods, and determine a current position of the moving object by using correction data corresponding to the selected correction method.

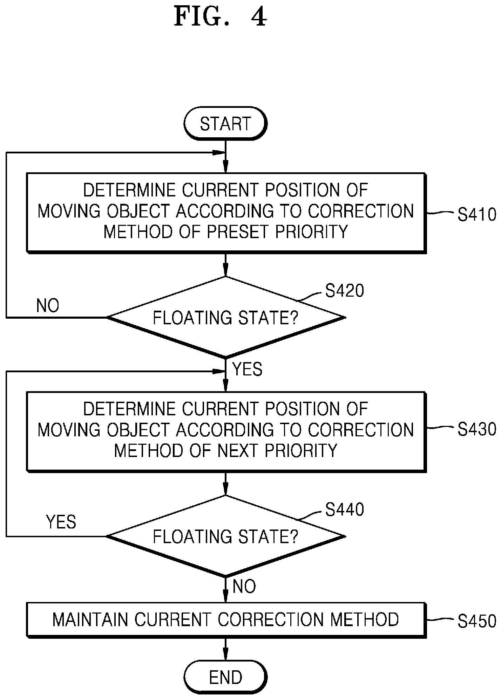

The control module 210 may switch, when failing to determine a current position of the moving object based on the correction method with the preset priority, the correction method to another correction method. A process of switching correction methods will be described with reference to FIG. 4.

FIG. 4 is a view of an embodiment for describing a process of switching correction methods.

In operation S410, the control module 210 may select a correction method with a preset priority from among a plurality of correction methods, and determine a current position of the moving object according to the correction method with the preset priority.

More specifically, the control module 210 may obtain correction data corresponding to the correction method with the preset priority from any communication module, and provide the obtained correction data to the GNSS module 270. The GNSS module 270 may determine a current position of the moving object based on the correction data and a GNSS signal.

In an embodiment, the preset priority may be a first rank. In the case in which the correction method of the first rank is unavailable, for example, in the case in which a communication method for obtaining correction data corresponding to the correction method of the first rank is unavailable, the control module 210 may select a correction method of a second rank.

In operation S420, the control module 210 may determine whether a floating state has occurred, while determining a current position of the moving object based on the correction method with the preset priority.

The floating state may mean a state in which a current position of the moving object is not determined. In contrast, a state in which a current position of the moving object is determined may be a fix state.

There may be many causes by which a floating state occurs. For example, in the case in which a communication method for obtaining correction data is unavailable, in the case in which an intensity of a GNSS signal becomes lower than a minimum intensity required by a correction method, or in the case in which reception of a GNSS signal is interrupted, a floating state may occur.

When a maintenance time of the floating state is within a preset time, the control module 210 may maintain the correction method of the preset priority in operation S410.

When the maintenance time of the floating state exceeds the preset time, the control module 210 may determine a current position of the moving object according to a correction method assigned a next priority of the preset priority, in operation S430.

For example, in the case in which the preset priority is a first rank, the control module 210 may determine a current position of the moving object according to a correction method of a second rank.

In an embodiment, before the control module 210 switches the correction method of the preset priority to the correction method of the next priority, the control module 210 may change a communication method for obtaining correction data corresponding to the correction method of the preset priority. In the case in which the floating state is maintained even after the communication method changes, the control module 210 may determine a current position of the moving object according to the correction method of the next priority. For example, when a communication method for the correction method of the preset priority is 5G communication, the control module 210 may attempt to determine a current position of the moving object according to the correction method of the preset priority through 4^{th} generation (4G) communication before switching to the correction method of the next priority.

According to an embodiment, in the case in which the control module 210 is capable of measuring a current position of the moving object using the correction method of the preset priority while determining the current position of the moving object according to the correction method of the next priority, the control module 210 may switch the correction method of the next priority to the correction method of the preset priority. For example, when a preset communication method becomes available after a correction method of a preset priority is switched to a correction method of a next priority due to unavailability of the preset communication method, the control module 210 may switch the correction method of the next priority to the correction method of the preset priority.

In operation S440, the control module 210 may determine whether a floating state has occurred, while determining a current position of the moving object according to the correction method of the next priority.

When a maintenance time of the floating state is within the preset time, the control module 210 may maintain the current correction method as it is in operation S450, and determine a current position of the moving object according to the current correction method.

When the maintenance time of the floating state exceeds the preset time, the control module 210 may determine a current position of the moving object according to a correction method of a next priority, in operation S430. Herein, in the case in which the preset priority is the first rank, the next priority may be a third rank. The reason may be because a floating state has occurred in the correction method of the first rank and the correction method of the second rank and thus switching to the correction method of the third rank has been performed.

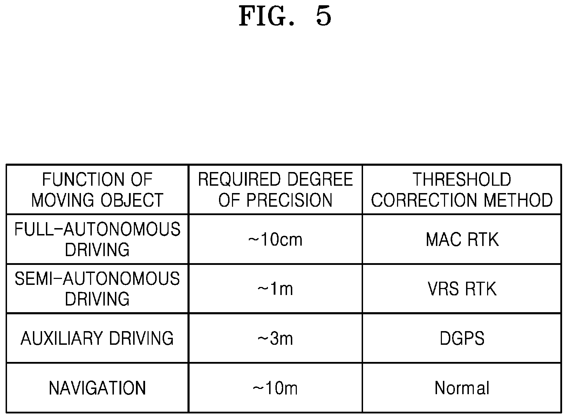

According to the process shown in FIG. 5, the control module 210 may switch a plurality of correction methods sequentially according to priorities. For example, referring to FIG. 3, the control module 210 may first select PPP RTK of a first rank, and when a floating state has occurred in PPP RTK, the control module 210 may select MAC RTK of a second rank. Also, when a floating state has occurred in MAC RTK, the control module 210 may select VRS RTK of a third rank.

That is, because the control module 210 selects and uses correction methods of first to n-th ranks sequentially, there may be difficulties in quickly determining a current position of the moving object. For example, when V2X communication is unavailable in a specific area, by preferentially selecting VRS RTK of a third rank, instead of selecting MAC RTK of a second rank to attempt to measure a current position of the moving object, the current position of the moving object may be more quickly determined.

In an embodiment, the control module 210 may consider a function executed on the moving object when selecting a correction method through the process shown in FIG. 4, which will be described with reference to FIG. 5.

FIG. 5 is a table showing required degrees of precision of functions that are executable on a moving object.

As shown in FIG. 5, required degrees of precision for functions that are executable on a moving object may be set.

For example, a full-autonomous driving mode may require a degree of precision that is less than or equal to 10 cm, and a semi-autonomous driving mode may require a degree of precision below 1 m. This means that, to stably operate the full-autonomous driving mode in the moving object, a correction method having a degree of precision that is less than or equal to 10 cm needs to be selected, and to stably operate the semi-autonomous driving mode, a correction method having a degree of precision below 1 m needs to be selected.

The control module 210 may check, when a specific function is executed on the moving object, a required degree of precision of the corresponding function and identify correction methods capable of supporting the corresponding function from among a plurality of correction methods.

The control module 210 may determine, as a threshold correction method, a correction method having a lowest degree of precision from among the correction methods capable of supporting the function executed on the moving object.

As shown in FIG. 5, in the case in which a required degree of precision of the full-autonomous driving function is less than or equal to 10 cm, MAC RTK having a lower degree of precision between PPP RTK and MAC RTK having degrees of precision below 10 cm among the correction methods shown in FIG. 3 may be selected as a threshold correction method. Also, in the case in which a required degree of precision of the semi-autonomous driving function is less than or equal to 1 m, VRS RTK having a lowest degree of precision among PPP RTK, MAC RTK, and VRS RTK having degrees of precision below 1 m among the correction methods shown in FIG. 3 may be selected as a threshold correction method.

Even though a floating state of a specific correction method continues while the control module 210 selects a correction method through the process shown in FIG. 4, the control module 210 may maintain the corresponding correction method in the case in which the correction method corresponds to a threshold correction method. The reason may be because switching to a correction method having a lower degree of precision than a threshold correction method is unnecessary in consideration of the function being executed on the moving object.

For example, even though MAC RTK of FIG. 3 is determined as a threshold correction method and a floating state continues in MAC RTK, the control module 210 may maintain MAC RTK without switching from MAC RTK to VRS RTK while continuing to attempt to determine a current position of the moving object.

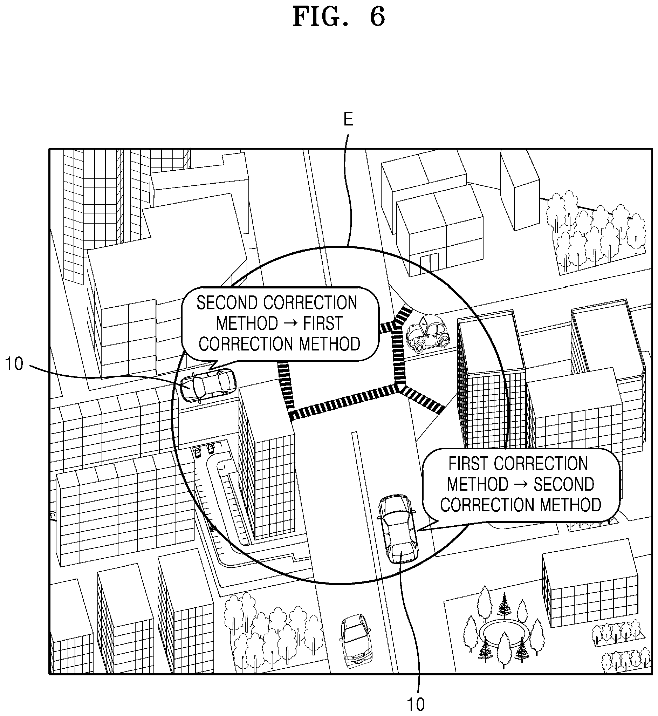

A situation in which the control module 210 switches a first correction method to a second correction method will be described with reference to FIG. 6.

FIG. 6 is a view of an embodiment illustrating a situation in which a correction method is switched while a moving object travels.

As shown in FIG. 6, while the moving object 10 travels, the electronic apparatus 200 may switch, while measuring a current position of the moving object 10 according to a first correction method, the first correction method to a second correction method due to an event situation occurred in a specific area E.

In an embodiment, in the case in which an event situation occurs when the moving object 10 enters the specific area E while the electronic apparatus 200 measures a current position of the moving object 10 according to the first correction method, the electronic apparatus 200 may switch the first correction method to the second correction method within the corresponding area E and then measure a current position of the moving object 10, and when the moving object 10 departs from the specific area E, the electronic apparatus 200 may switch the second correction method to the first correction method and then measure a current position of the moving object 10.

As such, in the specific area E, it may be more efficient to determine a current position of the moving object 10 using the second correction method from the beginning rather than attempting to determine the current position of the moving object 10 using the first correction method.

When an event situation causing switching of a correction method occurs, the control module 210 may store log information in the memory 230, and log information that is stored in the memory 230 will be described with reference to FIG. 7.

FIG. 7 shows log information according to an embodiment.

The control module 210 may store, as log information related to an event situation, at least one of a time at which the event situation has occurred, a position at which the event situation has occurred, correction data obtained through the communication modules 250-1, 250-2, ..., 250-n when the event situation has occurred, correction data used to determine a position of the moving object, CN0, a communication method when the event situation has occurred, a communication intensity when the event situation has occurred, a moving direction of the moving object before the event situation has occurred, or a moving direction of the moving object after the event situation has occurred, in the memory 230.

In regard to log information 701 stored on May 1st, it is confirmed that an event situation has occurred at latitude 38 and longitude 121, correction data corresponding to PPP RTK, MAC RTK, VRK RTK and DGPS has been obtained, and correction data corresponding to MAC RTK among the correction data has been used to determine a current location of a moving object. Also, it is confirmed that CN0 of a GNSS signal when the event situation has occurred is 47 and intensities of 5G communication, V2X communication, and DMB communication have been weak, strong, and weak, respectively. Additionally, it is confirmed that the moving object has continued to move in a northeast direction before and after the event situation has occurred.

The log information 701 stored on May 1st has been stored because correction data corresponding to MAC RTK of a second priority has been used even though correction data corresponding to PPP RTK of a first priority has been obtained. That is, when a case occurs where a correction method of a lower rank is used even though a correction method of a higher rank exists, the control module 210 may store log information related to the corresponding case.

Log information 702 stored at 9:00 PM on May 2nd has been stored because MAC RTK of the second rank has been used instead of PPP RTK of the first order to determine a current location of the moving object due to unavailability of 5G communication.

In an embodiment, when a function that operates based on position is not executed on the moving object, in other words, when there is no need to measure a current position of the moving object, the control module 210 may measure a current position of the moving object by using another correction method than a previously used correction method to secure log information. For example, in a specific area, a position of the moving object has been measured according to PPP RTK, but a function that operates based on position is not executed in the corresponding area. In this case, the current position may be measured according to other correction methods than PPP RTK.

When a current position of the moving object corresponds to position information included in log information, the control module 210 may change priorities assigned to at least some of a plurality of correction methods based on the log information.

While a current position of the moving object is measured according to a first correction method among the plurality of correction methods, the first correction method may be switched to a second correction method of a lower priority due to a certain cause (for example, maintenance of a floating state). In this case, the control module 210 may store related log information. When a current position of the moving object after the log information is stored corresponds to a position where switching to the second correction method has been performed, the control module 210 may change a priority of the second correction method to a higher priority than that of the first correction method.

As another example, while a current position of the moving object is measured according to the first correction method among the plurality of correction methods, a function requiring a higher degree of precision than that of the first correction method may be executed on the moving object. In this case, the control module 210 may store related log information. When a current position of the moving object after the log information is stored corresponds to a position where the function requiring the higher degree of precision has been executed, the control module 210 may determine a second correction method having a higher degree of precision than a required degree of precision of the function executed on the moving object, and change a priority of the second correction method to a higher priority than that of the first correction method.

As another example, when a current position of the moving object is measured according to the first correction method even though a third correction method assigned a higher priority than the first correction method exists, the control module 210 may store related log information. When a current position of the moving object after the log information is stored corresponds to a position where the first correction method has been selected, the control module 210 may change a priority of the first correction method to a higher priority than that of the third correction method.

In an embodiment, when the moving object is located within a preset distance from a position where an event situation has occurred, the control module 210 may change priorities assigned to at least some of a plurality of correction methods according to log information.

A geographic area where a change in priorities of correction methods is required may be referred to as an event area. The event area may be defined as an area within a preset distance from a position where an event situation has occurred.

In an embodiment, the preset distance may be determined from a communication range of a communication method that is available at the position where the event situation has occurred. For example, in the case in which V2X communication is available at a position where an event situation has occurred, the control module 210 may change priorities of correction methods when the moving object is located within a communication range of V2X communication from the position where the event situation has occurred.

Hereinafter, embodiments in which the control module 210 changes priorities assigned to at least some of a plurality of correction methods based on log information will be described.

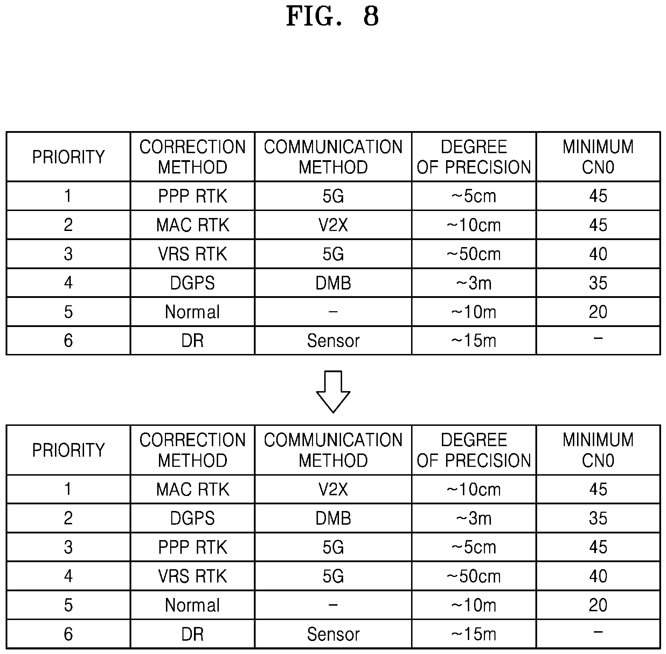

FIG. 8 shows a method of changing priorities of correction methods when an event situation corresponds to a case in which 5G communication is unavailable.

When a current position of the moving object corresponds to an event area and switching of a correction method has been performed or a floating state has occurred due to unavailability of 5G communication within the corresponding event area, the control module 210 may change a priority of a correction method using 5G communication to a lower priority.

Referring to FIG. 8, in the case in which PPP RTK and VRS RTK using 5G communication have been assigned a first rank and a third rank, respectively, the control module 210 may change priorities of MAC RTK and DGPS using V2X communication and DMB communication to a first rank and a second rank, respectively, and change priorities of PPP RTK and VRS RTK to a third priority and a fourth priority, respectively. Accordingly, the control module 210 may measure a current position of the moving object by using MAC RTK of the first rank within the event area, and when a floating state occurs, the control module 210 may measure a current position of the moving object by using DGPS of the second rank.

That is, because the priorities of PPP RTK and VRS RTK using 5G g communication have changed to the third rank and the fourth rank, respectively, the control module 210 may quickly measure a position of the moving object by using MAC RTK and DGPS before attempting to determine a current position of the moving object by using a correction method using 5G communication.

FIG. 8 shows an example in which the priorities of PPP RTK and VRS RTK using 5G communication have changed to the third rank and the fourth rank, respectively. However, this is only an example, and the priorities of PPP RTK and VRS RTK may change to lower priorities than that of Normal or DR.

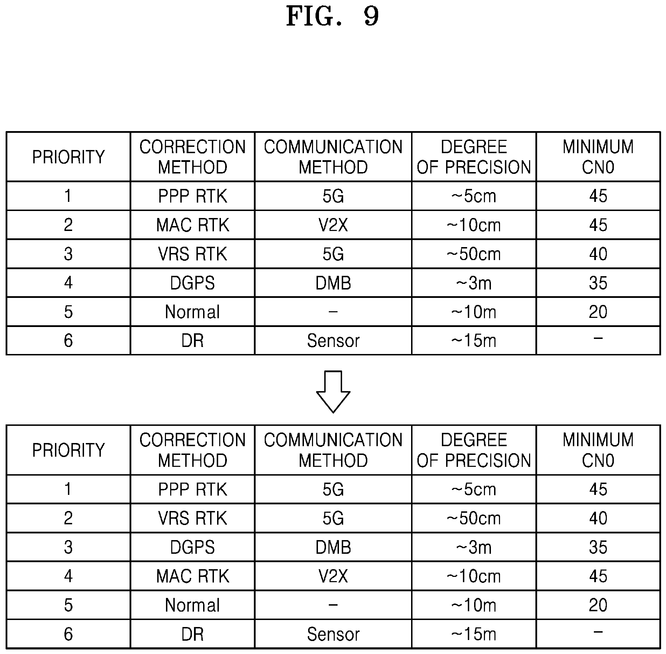

FIG. 9 shows a method of changing priorities of correction methods when an event situation corresponds to a case in which V2X communication is unavailable.

When a current position of the moving object corresponds to an event area and V2X communication is unavailable within the corresponding event area, the control module 210 may change a priority of a correction method using V2X communication to a lower priority.

Referring to FIG. 9, in the case in which MAC RTK using V2X communication has been assigned a second rank, the control module 210 may change a priority of MAC RTK to a fourth rank and change priorities of VRS RTK and DGPS not using V2X communication from a third rank and a fourth rank to a second rank and a third rank, respectively.

Because the priority of MAC RTK using V2X communication has changed to the fourth rank, the control module 210 may quickly measure a position of the moving object by using PPP RTK, VRS RTK or DGPS that enables stable communication, before attempting to determine a current position of the moving object by using a correction method using V2X communication.

FIG. 9 shows an example in which the priority of MAC RTK using V2X communication has changed to the fourth rank. However, this is only an example, and the priority of MAC RTK may change to a lower priority than that of Normal or DR.

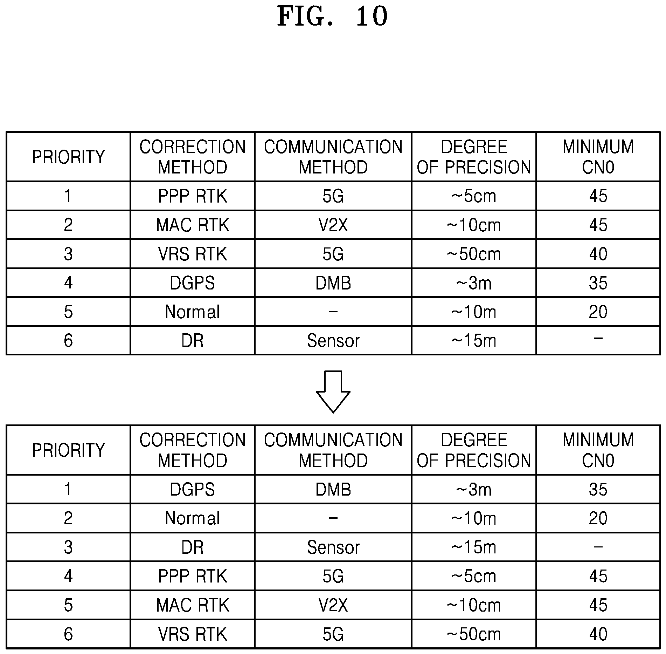

FIG. 10 shows a method of changing priorities of correction methods when an event situation corresponds to a case in which an intensity of a GNSS signal has been reduced.

When a current position of the moving object corresponds to an event area and an intensity of a GNSS signal is reduced within the corresponding event area, the control module 210 may change a priority of a correction method that is unavailable based on the reduced intensity of the GNSS signal, to a lower priority.

For example, when an intensity of a GNSS signal is reduced to 38 within an event area, the control module 210 may change a priority of a correction method in which a minimum required intensity of a GNSS signal is greater than 38, to a lower priority.

Referring to FIG. 10, because minimum intensities of a GNSS signal, required by PPP RTK, MAC RTK, and VRS RTK, are 45, 45, and 40, respectively, which are greater than the intensity of the GNSS signal of 38, the control module 210 may change priorities of PPP RTK, MAC RTK, and VRS RTK from a first rank, a second rank, and a third rank to a fourth rank, a fifth rank, and a sixth rank, respectively. Accordingly, priorities of DGPS, Normal, and DR may change to a first rank, a second rank, and a third rank, respectively.

In an embodiment, because degrees of precision of DGPS, Normal, and DP are lower than degrees of precision of PPP RTK, MAC RTK, and VRS RTK, the control module 210 may consider a required degree of precision of a function executed on the moving object when changing priorities of correction methods.

More specifically, the control module 210 may change a priority of only a correction method having a higher degree of precision than the required degree of precision of the function executed on the moving object, to a higher priority than those of PPP RTK, MAC RTK, and VRS RTK. For example, in the case in which a required degree of precision of a function executed on the moving object is less than or equal to 10 m, the control module 210 may change priorities of DGPS and Normal satisfying the corresponding degree of precision to a first rank and a second rank, respectively, and change a priority of DR not satisfying the required degree of precision of the function executed on the moving object, to a lower priority than that of any of PPP RTK, MAC RTK, or VRS RTK.

According to the embodiment shown in FIG. 10, because correction methods not supporting an intensity of a GNSS signal in the event area change to have lower priorities, a position of the moving object may be quickly measured by correction methods that support the intensity of the GNSS signal in the event area.

In an embodiment, in the case in which reception of a GNSS signal is interrupted in the event area, the control module 210 may change a priority of a correction method that does not use a GNSS signal to a higher priority. For example, because DR does not use a GNSS signal, the control module 210 may change a priority of DR to a first priority, and change priorities of the other correction methods to lower priorities than that of DR.

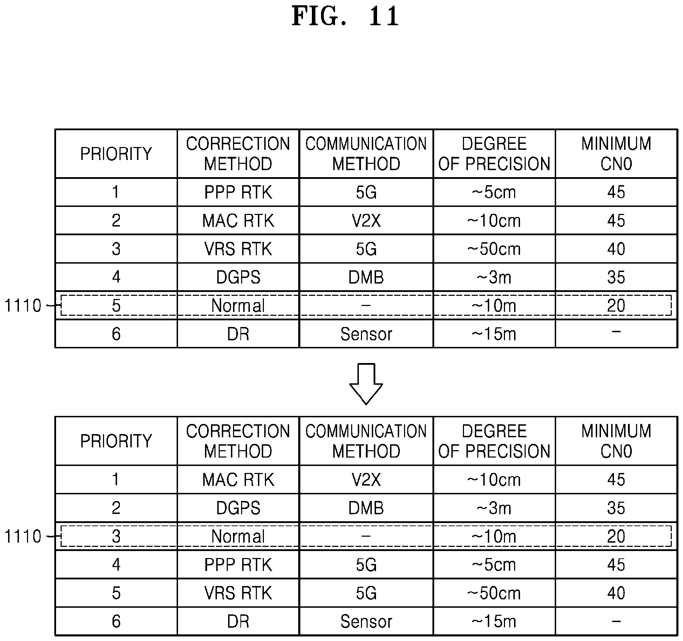

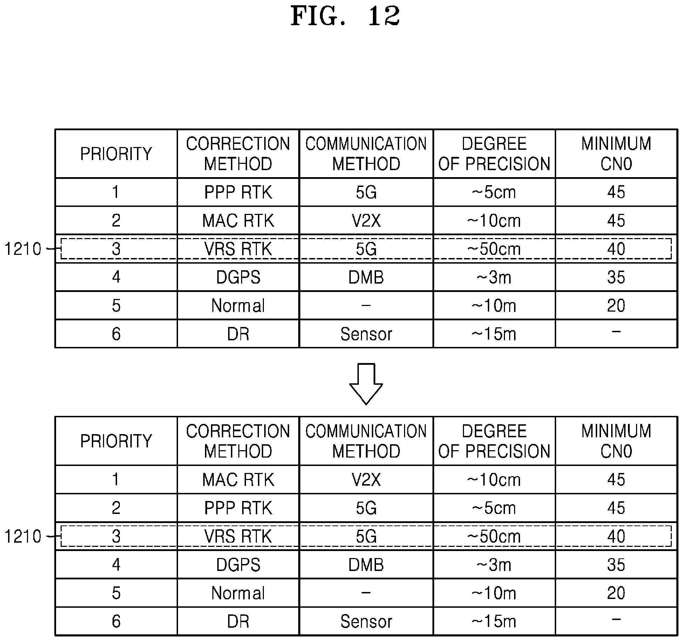

FIGS. 11 and 12 are views for describing a method of changing priorities of correction methods in consideration of a required degree of precision of a function executed on a moving object according to an embodiment.

In an embodiment, the control module 210 may change a priority of a correction method that needs to change to a low rank in an event area, to a lower priority than that of a threshold correction method.

Referring to FIG. 11, when 5G communication is unavailable in an event area, priorities of PPP RTK and VRS RTK may need to change to lower priorities. In the case in which a threshold correction method satisfying a required degree of precision of a function executed on the moving object is Normal 1110, the control module 210 may change priorities of PPP RTK and VRS RTK to lower priorities than that of Normal 1110.

By assigning high ranks to correction methods capable of supporting a function executed on the moving object, the function executed on the moving object may stably operate.

In an embodiment, in the case in which a correction method that needs to change to have a low priority is a threshold correction method, the control module 210 may change priorities of correction methods that need to change to have low priorities, to higher priorities than those of correction methods incapable of supporting the function executed on the moving object.

It may be assumed that priorities of PPP RTK and VRS RTK need to change to low priorities because 5G communication is unavailable in an event area, and a threshold correction method satisfying a required degree of precision of a function executed on the moving object is VRS RTK.

Referring to FIG. 12, the control module 210 may change a priority of MAC RTK that has a higher precision than that of VRS RTK 1210 and does not use 5G communication, to a first rank. Also, the control module 210 may change a priority of PPP RTK that has a higher precision than that of VRS RTK 1210 but uses 5G communication, to a second rank, and maintain a priority of VRS RTK 1210 at a third rank. Accordingly, priorities of DGPS, Normal, and DR having lower degrees of precision than that of VRS RTK 1210 may be maintained lower than the priority of VRS RTK 1210.

That is, according to an embodiment, by assigning high priorities to correction methods (for example, MAC RTK and VRS RTK) that have higher degrees of precision than a required degree of precision of a function executed on the moving object, even though a 5G communication method is unavailable in an event area, a stable operation of the function executed on the moving object may be secured. This may be because there is a possibility that 5G communication becomes available within the event area and securing a stable operation of the function executed on the moving object contributes more to safety of the moving object and a passenger.

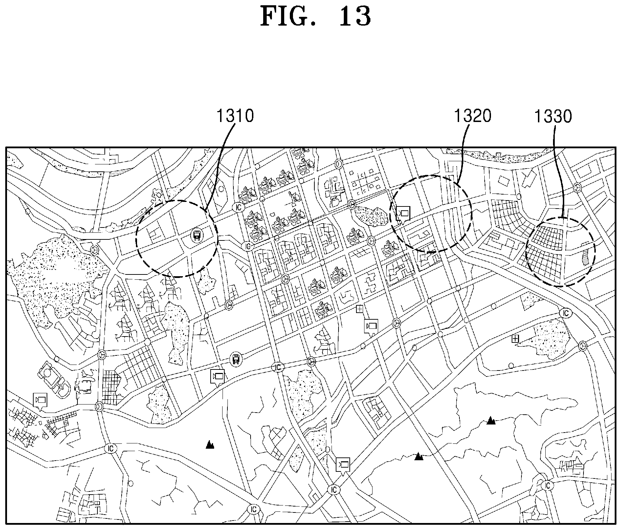

FIG. 13 is a view of an embodiment representing event areas where priorities of a plurality of correction methods need to change.

According to log information stored by the control module 210, one or more event areas where priorities of correction methods need to change may be identified.

The control module 210 may change, when a current position of the moving object corresponds to any of the event areas, a priority of at least one of the plurality of correction methods in consideration of an event situation that has occurred in the corresponding event area.

In an embodiment, the control module 210 may select, when a current position of the moving object corresponds to none of the event areas, any correction method from among the plurality of correction methods according to preset priorities and determine a current position of the moving object according to the selected correction method.

For example, as shown in FIG. 13, in the case in which a first event area 1310 and a second event area 1320 are identified from the log information, the control module 210 may change, when a current position of the moving object corresponds to the first event area 1310, a priority of at least one among the plurality of correction methods according to an event situation that has occurred in the first event area 1310. The control module 210 may select, based on the changed priorities, any correction method of the plurality of correction methods and determine a current position of the moving object according to the selected correction method.

Also, when the moving object departs from the first event area 1310, the control module 210 may select any correction method from among the plurality of correction methods based on the priorities before the priorities change, and determine a current position of the moving object according to the selected correction method.

Also, when a current position of the moving object corresponds to the second event area 1320, the control module 210 may change a priority of at least one among the plurality of correction methods according to an event situation that has occurred in the second event area 1320. The control module 210 may select, based on the changed priorities, any correction method from among the plurality of correction methods and determine a current position of the moving object according to the selected correction method.

Also, when the moving object departs from the second event area 1320, the control module 210 may select any correction method from among the plurality of correction methods based on the priorities before the priorities change, and determine a current position of the moving object according to the selected correction method.

A method in which priorities change in the first event area 1310 and a method in which priorities change in the second event area 1320 may be different from each other. For example, when an event situation corresponding to a case in which 5G communication is unavailable occurs in the first event area 1310, the control module 210 may change priorities according to the method described with reference to FIG. 8. For example, when an event situation corresponding to a case in which an intensity of a GNSS signal has been reduced occurs in the second event area 1320, the control module 210 may change priorities according to the method described with reference to FIG. 10.

In an embodiment, when a current position of the moving object corresponds to an area 1330 where a preset correction method is usable, the control module 210 may change a priority of the corresponding correction method to a higher priority than those of the other correction methods.

Information about the area 1330 where the preset correction method is usable may have been stored in advance in the memory 230. More specifically, in the case in which the preset correction method is MAC RTK using V2X communication, the control module 210 may change a priority of MAC RTK to a first rank when a current position of the moving object is located within the area 1330 where V2X communication with a Road Side Unit (RSU) is allowed. This may be to improve accuracy and speed of positioning by causing, when a current position of the moving object is adjacent to a facility (for example, RSU) for providing correction data, the control module 210 to preferentially use a correction method provided by the corresponding facility.

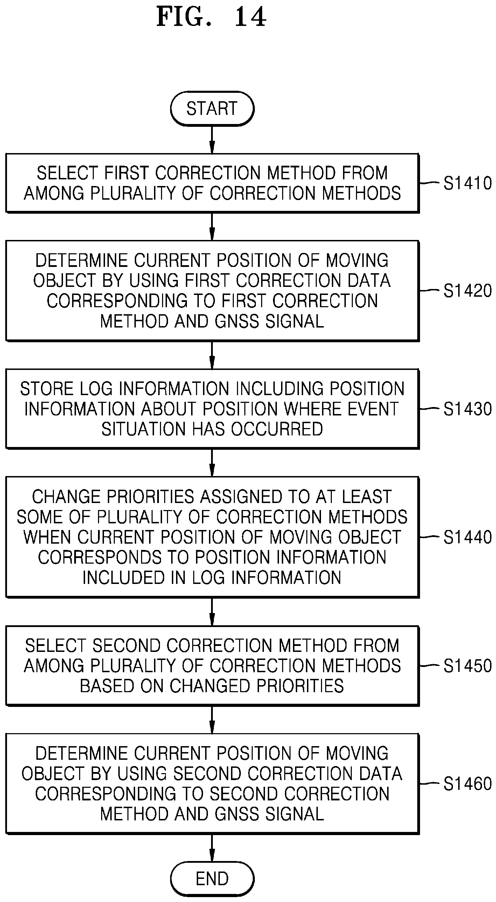

FIG. 14 is a flowchart for describing a method of determining a position of a moving object according to an embodiment.

In operation S1410, the electronic apparatus 200 may select a first correction method from among a plurality of correction methods that are usable, according to priorities.

In operation S1420, the electronic apparatus 200 may obtain first correction data corresponding to the first correction method according to a preset communication method, and determine a current position of the moving object by using the first correction data and a GNSS signal.

In operation S1430, the electronic apparatus 200 may determine whether an event situation related to the first correction method has occurred, and store, according to occurrence of the event situation, log information including position information about a position where the event situation has occurred.

In operation S1440, when a current position of the moving object corresponds to the position information included in the log information, in other words, when a current position of the moving object is within an event area identified from the position information included in the log information, the electronic apparatus 200 may change priorities assigned to at least some of the plurality of correction methods.

In operation S1450, the electronic apparatus 200 may select, based on the changed priorities, a second correction method from among the plurality of correction methods.

Herein, a priority of the first correction method before the priorities change may be higher than a priority of the second correction method, and a priority of the first correction method after the priorities change may be lower than a priority of the second correction method.

In operation S1460, the electronic apparatus 200 may obtain second correction data corresponding to the second correction method, and determine a current position of the moving object by using the second correction data and a GNSS signal.

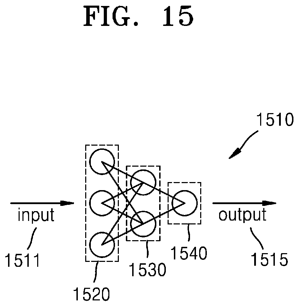

In the disclosed embodiment, at least one of operations that are performed by the control module 210 may be performed by using Artificial Intelligence (Al) technology. An operation that is performed by using artificial intelligence (Al) technology will be described in detail with reference to FIG. 15, below.

FIG. 15 is a view for describing an operation that is performed by using artificial intelligence technology in an embodiment.

More specifically, at least one (hereinafter, an operation of the electronic apparatus 200) among i) operation of determining whether switching of a correction method is needed, ii) operation of determining whether an event situation has occurred, iii) operation of storing log information, or iv) operation of determining how to change priorities of correction methods, which is performed by the electronic apparatus 200, may be performed by using artificial intelligence (Al) technology that performs computation through a neural network. For example, an operation of the electronic apparatus 200 may be performed based on artificial intelligence according to a communication state between the electronic apparatus 200 and a server (not shown).

Artificial intelligence technology (hereinafter, Al technology) may be technology of obtaining a desired result by performing processing such as analysis and/or classification on input data based on computation through a neural network.

The Al technology may be implemented by using an algorithm. Herein, an algorithm or a set of algorithms for implementing the Al technology is called a neural network. The neural network may receive data, perform computation for analysis and/or classification as described above, and output result data. For the neural network to output accurate result data corresponding to input data, it may be necessary to train the neural network. Herein, 'training' may mean training a neural network to itself find or learn a method of analyzing input data with respect to the neural network, a method of classifying input data, and/or a method of extracting a feature required to generate result data from input data. More specifically, through a training process, a neural network may train training data to optimize weights (or parameters) within the neural network. Also, by processing input data through the neural network having the optimized weights, a desired result may be output.

A neural network may be classified as a deep neural network when the number of hidden layers, which are internal layers of performing computation, is multiple, that is, when a depth of the neural network that performs computation increases. Examples of neural networks include a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), and Deep Q-Networks, although not limited to the above examples. Also, a neural network may be subdivided. For example, a CNN neural network may be subdivided into a Deep Convolution Neural Network (DCNN) or a Capsnet neural network (not shown).

An 'Al model' may mean a neural network including at least one layer that operates to receive input data and output a desired result. Also, the 'Al model' may mean an algorithm or a set of algorithms for performing computation through a neural network to output a desired result, a processor for executing the algorithm (or the set of algorithms), software for executing the algorithm (or the set of algorithms), or hardware for executing the algorithm (or the set of algorithms).

Referring to FIG. 15, a neural network 1510 may be trained by receiving training data. Then, the trained neural network 1510 may receive input data 1511 (for example, information (for example, speed of the moving object, a load of an ECU in the moving object, temperature of the ECU, a function executed on the moving object, etc.) related to the moving object, information about surroundings of the moving object, information (for example, a network type, an available bandwidth, or qualities of signals transmitted/received through the bandwidth) related to a network that is available at a current position of the moving object, etc.) through an input terminal 1520, and the input terminal 1520, a hidden layer 1530, and an output terminal 1540 may perform computation for outputting output data 1515 by analyzing the input data 1511 and data transferred from a previous layer.

In FIG. 15, a single hidden layer 1530 is shown. However, this is only an example, and a plurality of hidden layers 1530 may be provided.

For example, the neural network 1510 may train how to determine when to switch a correction method based on information related to the moving object and/or information about surroundings of the moving object. The neural network 1510 that has completed training may receive information related to the moving object and/or information about surroundings of the moving object, and determine whether switching of a correction method is needed.

As another example, the neural network 1510 may train at least one of a method of determining whether an event situation has occurred or a method of changing priorities of correction methods.

In the disclosed embodiment, the neural network that performs an operation of the electronic apparatus 200 may be implemented in a control module (for example, 210 of FIG. 2).

Alternatively, the neural network that performs an operation of the electronic apparatus 200 as described above may be implemented in another electronic apparatus (not shown) or another processor, which is separated from the electronic apparatus 200.

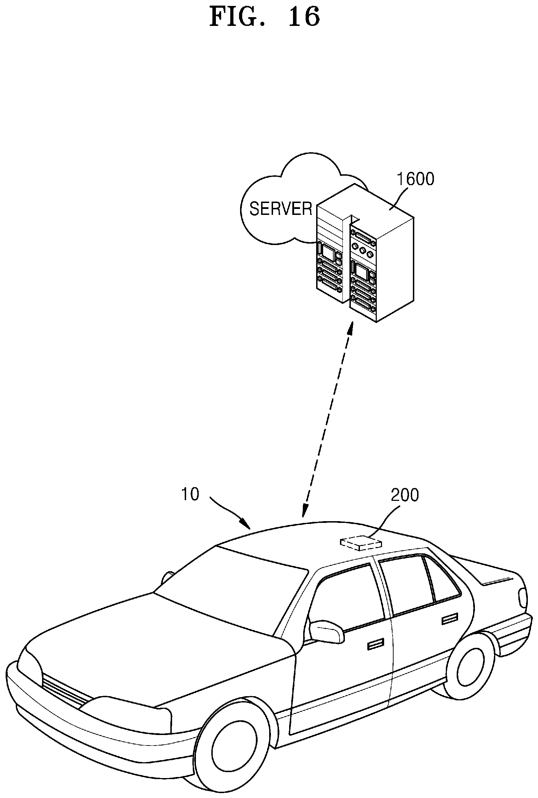

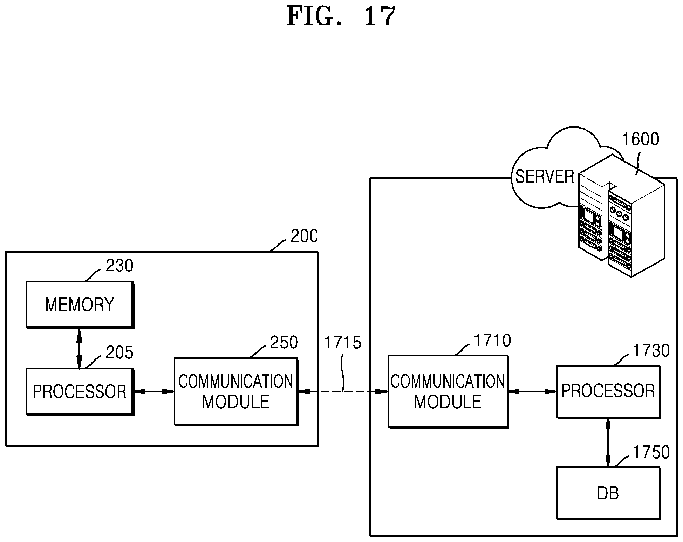

Computation through the above-described neural network may be performed in a server (not shown) capable of communicating with the electronic apparatus 200 according to an embodiment through a wireless communication network. Communication between the electronic apparatus 200 and the server (not shown) will be described with reference to FIGS. 16 and 17.

FIG. 16 is a view of an embodiment showing the electronic apparatus 200 installed in the moving object 10 and a server 1600.

In the disclosed embodiment, at least one of i) operation of determining whether switching of a correction method is needed, ii) operation of determining whether an event situation has occurred, iii) operation of storing log information, or iv) operation of determining how to change priorities of correction methods may be performed on the server 1600, and the result of the performance may be transmitted to the electronic apparatus 200 located in the moving object 10.

The server 1600 may process data by transmitting/receiving data to/from the electronic apparatus 200 through a communication network.

In an embodiment, a separate electronic apparatus installed in the moving object may receive, from the server 1600, a result of at least one of i) operation of determining whether switching of a correction method is needed, ii) operation of determining whether an event situation has occurred, iii) operation of storing log information, or iv) operation of determining how to change priorities of correction methods, and transfer the received result to the electronic apparatus 200. In this case, the electronic apparatus 200 may operate according to the received result.

The server 1600 may include a server, a server system, or a server-based apparatus which processes data by transmitting/receiving data to/from the electronic apparatus 200 through a communication network.

Referring to FIG. 17, the server 1600 may include a communication module 1710 that communicates with the electronic apparatus 200, and a processor 1730 that performs at least one instruction.

For example, the processor 1730 of the server 1600 may receive information related to the moving object 10 and/or information about surroundings of the moving object 10, and determine whether there is a need to switch a correction method. The communication module 1710 may transmit, to the electronic apparatus 200, information indicating that there is a need to switch a correction method.

As another example, the processor 1730 of the server 1600 may change priorities of correction methods. The communication module 1710 may transmit information about the changed priorities of the correction methods to the electronic apparatus 200.

In the disclosed embodiment, the server 1600 may perform an operation of the electronic apparatus 200 by performing computation through the neural network 1510 described with reference to FIG. 15. More specifically, the server 1600 may train an Al model and store the trained Al model. Also, the server 1600 may perform an operation of the electronic apparatus 200 as described above by using the trained Al model.

Generally, the electronic apparatus 200 may be limited in memory storage capacity, computational processing speed, and training data set collection capability, compared to the server 1600. Accordingly, operations requiring storage of a large amount of data and a large amount of computation may be performed on the server 1600, and then required data and/or an AI model may be transmitted to the electronic device 200 through a communication network. Therefore, the electronic apparatus 200 may quickly and easily perform a required operation by receiving and using required data and/or an AI model from the server 1600, without a large capacity of memory and a processor with fast computing capability.

In the disclosed embodiment, the server 1600 may include the neural network 1510 described with reference to FIG. 15. More specifically, the neural network 1510 included in the server 1600 may perform computation for operations of the electronic apparatus 200 as described above.

A processor 205 (for example, the control module 210 shown in FIG. 2) of the electronic apparatus 200 may process data obtained through a communication module 250 (for example, at least one of the plurality of communication modules 250-1, ..., 250-n shown in FIG. 2).

The communication module 250 of the electronic apparatus 200 may communicate with an external apparatus through a wireless communication network 1715. Herein, the external apparatus may include a server 1600 capable of performing at least one among operations required by the electronic apparatus 200 or transmitting data required by the electronic apparatus 200.

The communication module 250 may include at least one communication module, such as a short-range communication module, a wired communication module, a mobile communication module, and a broadcast receiving module. Herein, the communication module 250 may include a communication module capable of transmitting and receiving data through a network based on a communication standard, such as a tuner that performs broadcast reception, Bluetooth, Wireless LAN (WLAN; Wi-Fi), Wireless broadband (Wibro), World Interoperability for Microwave Access (Wimax), Code Division Multiple Access (CDMA), Wideband Code Division Multiple Access (WCDMA), the Internet, 3^{rd} Generation (3G), 4G, 5G and/or a communication method using millimeter waves (mmwave).

For example, when the communication module 250 performs communication by using millimeter waves (mmWAVE), the communication module 250 may quickly transmit/receive a large amount of data. More specifically, the moving object 10 may increase safety of the moving object 10 and/or a user's convenience by quickly receiving a large amount of data using millimeter waves and quickly providing data (for example, data required for autonomous driving, data required for a navigation service, etc.) required for safety of the moving object 10, content (for example, movie, music, etc.) that is used by a user, etc.

The communication module 250 may communicate with another apparatus (for example, the server 1600) located at a long distance through a communication network according to a communication standard, such as 3G, 4G, and/or 5G. Herein, the communication module 250 that communicates with another apparatus located at a long distance is referred to as a 'long-distance communication module'.

The communication module 1710 of the server 1600 may include one or more components that enable communication with the electronic apparatus 200. Because a detailed configuration of the communication module 1710 is the same as that of the communication module 250 described above, a detailed description thereof will be omitted.

For example, the communication module 1710 may communicate with another apparatus (for example, the electronic apparatus 200) located at a long distance through a communication network according to a communication standard, such as the Internet, 3G, 4G, and/or 5G.

The processor 1730 may control overall operations of the server 1600. For example, the processor 1730 may execute at least one of at least one instruction and programs of the server 1600 to perform required operations.

A DB 1750 may include a memory (not shown), and at least one of at least one instruction, a program, or data required for the server 1600 to perform a preset operation may be stored in the memory (not shown). Also, the DB 1750 may store data required for the server 1600 to perform computation according to a neural network.

In the disclosed embodiment, the server 1600 may store the neural network 1510 described with reference to FIG. 15. The neural network 1510 may be stored in at least one of the processor 1730 or the DB 1750. The neural network 1510 stored in the server 1600 may be a neural network that has completed training.

In the disclosed embodiment, the server 1600 may perform the above-described operations of the electronic apparatus 200 by using the neural network included therein, and transmit data derived as the result of the performance to the communication module 250 of the electronic apparatus 200 through the communication module 1710.

Also, the server 1600 may transmit the neural network that has completed training, to the communication module 250 of the electronic device 200 through the communication module 1710. Then, the electronic apparatus 200 may obtain and store the neural network that has completed training, and obtain desired output data through the neural network.

The electronic apparatus 200 according to an embodiment and the method of positioning the moving object by using the electronic apparatus 200 may be provided to quickly measure a position of the moving object.

The electronic apparatus 200 according to an embodiment and the method of positioning the moving object by using the electronic apparatus 200 may be provided to stably operate a function executed on the moving object.

The electronic apparatus 200 according to an embodiment and the method of positioning the moving object by using the electronic apparatus 200 may be provided to secure safety of the moving object and a passenger.

According to an embodiment, a method of determining a current position of a moving object, performed by an electronic apparatus 200, may include selecting a first correction method from among a plurality of correction methods assigned priorities.

According to an embodiment, the method of determining the current position of the moving object, performed by the electronic apparatus 200, may include determining the current position of the moving object by using a global navigation satellite system (GNSS) signal and first correction data corresponding to the first correction method.

According to an embodiment, the method of determining the current position of the moving object, performed by the electronic apparatus 200, may include storing, when an event situation related to the first correction method has occurred, log information including position information about a position where the event situation has occurred.

According to an embodiment, the method of determining the current position of the moving object, performed by the electronic apparatus 200, may include changing, when the current position of the moving object corresponds to the position information included in the log information after the log information is stored, a priority assigned to at least one of the plurality of correction methods.

According to an embodiment, the method of determining the current position of the moving object, performed by the electronic apparatus 200, may include selecting, based on the changed priority, a second correction method from among the plurality of correction methods.

According to an embodiment, the method of determining the current position of the moving object, performed by the electronic apparatus 200, may include determining the current position of the moving object by using second correction data corresponding to the second correction method and the GNSS signal.

In an embodiment, a priority assigned to the first correction method before the priority changes may be higher than a priority assigned to the second correction method, and a priority assigned to the first correction method according to the change of the priority may be lower than a priority assigned to the second correction method.

According to an embodiment, the method of determining the current position of the moving object, performed by the electronic apparatus 200, may further include: determining the plurality of correction methods that are available, based on area information of the moving object, before the first correction method is selected; and assigning priorities to the plurality of correction methods.

In an embodiment, the event situation may include at least one among a case in which the current position is, after the first correction method is selected, determined based on the second correction method instead of the first correction method, a case in which communication according to a first communication method used to receive the first correction data is unavailable, a case in which the current position is not determined based on the first correction method for a preset time, a case in which an intensity of the GNSS signal is reduced to be less than or equal to a preset value, a case in which reception of the GNSS signal is interrupted, a case in which a function requiring a higher degree of precision than a degree of precision of the first correction method is executed on the moving object, or a case in which a third correction method assigned a higher priority than a priority assigned to the first correction method exists.

In an embodiment, the changing of the priority may include changing, when the event situation corresponds to the case in which the communication according to the first communication method is unavailable, priorities of the first correction method and other correction methods using the first communication method to lower priorities than a priority of the second correction method using a second communication method.

In an embodiment, the changing of the priorities may include determining, when the event situation corresponds to the case in which the intensity of the GNSS is reduced to be less than or equal to the preset value, the second correction method in which a minimum required intensity of a GNSS signal is less than or equal to the reduced intensity of the GNSS signal, and changing the priority of the second correction method to a higher priority than the priority of the first correction method.

In an embodiment, the changing of the priorities may include determining, when the event situation corresponds to the case in which the function requiring the higher degree of precision than the degree of precision of the first correction method is executed on the moving object, the second correction method having a higher degree of precision than a required degree of precision of the function executed on the moving object, and changing the priority of the second correction method to a higher priority than the priority of the first correction method.

In an embodiment, the changing of the priorities may include changing, when the event situation corresponds to the case in which the third correction method assigned the higher priority than the priority assigned to the first correction method exists, the priority of the first correction method to a higher priority than the priority of the third correction method.

According to an embodiment, the method of determining the current position of the moving object, performed by the electronic apparatus 200, may further include determining, as a threshold correction method, a correction method having a lowest degree of precision among correction methods satisfying the required degree of precision of the function executed on the moving object.

In an embodiment, the changing of the priorities may include changing the priority of the first correction method to a lower priority than a priority of the threshold correction method.

In an embodiment, when the first correction method corresponds to the threshold correction method, the priority of the first correction method may change to a higher priority than a priority of a fourth correction method having a lower degree of precision than the degree of precision of the first correction method.

According to an embodiment, the method of determining the current position of the moving object, performed by the electronic apparatus 200, may further include switching, when the current position determined according to the second correction method does not correspond to the position information included in the log information, the second correction method to the first correction method based on priorities before the changing of the priorities.

According to an embodiment, the method of determining the current position of the moving object, performed by the electronic apparatus 200, may further include changing, when the current position of the moving object corresponds to an area where a preset correction method is available, a priority of the preset correction method to a higher priority than priorities of the other correction methods.

According to an embodiment, the method of determining the current position of the moving object, performed by the electronic apparatus 200, may further include selecting, when an event situation occurs, the second correction method based on priorities of the plurality of correction methods before the priorities change; and determining the current position of the moving object by using the GNSS signal and the second correction data corresponding to the second correction method.

In an embodiment, when a degree of precision of the second correction method is higher than the required degree of precision of the function executed on the moving object, the second correction method may be selected.

According to an embodiment, an electronic apparatus 200 for determining a current position of a moving object may include: a GNSS (global navigation satellite system) module 270 configured to determine the current position of the moving object by using a GNSS signal and correction data; one or more memories 230 storing at least one instruction; and one or more processors configured to operate according to the at least one instruction.

In an embodiment, the one or more processors may be configured to select a first correction method from among a plurality of correction methods assigned priorities.

In an embodiment, the one or more processors may be configured to provide first correction data corresponding to the first correction method to the GNSS module 270.

In an embodiment, the one or more processors may be configured to store, when an event situation related to the first correction method has occurred, log information including position information about a position where the event situation has occurred in the one or more memories 230.

In an embodiment, the one or more processors may be configured to change, when the current position of the moving object corresponds to the position information included in the log information after the log information is stored, a priority assigned to at least one of the plurality of correction methods.

In an embodiment, the one or more processors may be configured to select, based on the changed priority, a second correction method from among the plurality of correction methods.

In an embodiment, the one or more processors may be configured to provide second correction data corresponding to the second correction method to the GNSS module 270.

In an embodiment, the GNSS module 270 may be configured to determine the current position of the moving object by using the GNSS signal and the first correction data or the second correction data provided from the one or more processors.

The electronic apparatus 200 according to an embodiment and the method of positioning the moving object by using the electronic apparatus 200 may quickly measure a position of the moving object by adaptively selecting a correction method that is used to measure the position of the moving object according to pre-stored log information.

The electronic apparatus 200 according to an embodiment and the method of positioning the moving object by using the electronic apparatus 200 may stably operate a function executed on the moving object by using a correction method having a higher precision than a required degree of precision of the corresponding function.

The electronic apparatus 200 according to an embodiment and the method of positioning the moving object by using the electronic apparatus 200 may prevent an accident that may occur during driving of the moving object by quickly and accurately measuring a position of the moving object.

Meanwhile, the embodiments of the disclosure may be written as a program that is executable on a computer, and the written program may be stored in a machine-readable recording medium.

The machine-readable recording medium may be provided in the form of a non-transitory storage medium. The term 'non-transitory storage medium' simply means that the storage medium is a tangible device, and does not include a signal (e.g., an electromagnetic wave), but this term does not differentiate between where data is semi-permanently stored in the storage medium and where the data is temporarily stored in the storage medium. For example, a 'non-transitory storage medium' may include a buffer in which data is temporarily stored.

According to an embodiment, a method according to various embodiments of the disclosure may be included and provided in a computer program product. The computer program product may be traded as a product between a seller and a buyer The computer program product may be distributed in the form of a machine-readable storage medium (e.g., compact disc read only memory (CD-ROM)), or be distributed (e.g., downloadable or uploadable) online via an application store (e.g., Play Store^{™}) or between two user devices (e.g., smart phones) directly. When distributed online, at least part of the computer program product (e.g., a downloadable app) may be temporarily generated or at least temporarily stored in the machine-readable storage medium, such as a memory of the manufacturer's server, a server of the application store, or a relay server.

So far, the technical concepts of the disclosure have been described in detail with reference to the preferred embodiments. However, the technical concepts of the disclosure are not limited to the above embodiments, and various modifications and variations may be made by one of ordinary skill in the art within the scope of the technical concepts of the disclosure.

## Claims

1. A method of determining a current position of a moving object, performed by an electronic apparatus 200, the method comprising:
selecting a first correction method from among a plurality of correction methods, wherein priorities are assigned to the plurality of correction methods;
determining the current position of the moving object by using a global navigation satellite system (GNSS) signal and first correction data corresponding to the first correction method;
storing, when an event situation related to the first correction method has occurred, log information including position information about a position where the event situation has occurred;
changing, when the current position of the moving object corresponds to the position information included in the log information after the log information is stored, a priority assigned to at least one of the plurality of correction methods;
selecting, based on the changed priority, a second correction method from among the plurality of correction methods; and
determining the current position of the moving object by using second correction data corresponding to the second correction method and the GNSS signal,
wherein a priority assigned to the first correction method before the priority change is higher than a priority assigned to the second correction method, and a priority assigned to the first correction method according to the change of the priority is lower than a priority assigned to the second correction method.

2. The method of claim 1,
further comprising:
determining the plurality of correction methods that are available, based on area information of the moving object, before the first correction method is selected; and
assigning priorities to the determined plurality of correction methods.

3. The method of any one of claim 1 or 2, wherein
the event situation comprises at least one among
a case in which, after the first correction method is selected, the current position is determined based on the second correction method instead of the first correction method,
a case in which communication according to a first communication method used to receive the first correction data is unavailable,
a case in which the current position is not determined based on the first correction method for a preset time,
a case in which an intensity of the GNSS signal is reduced to be less than or equal to a preset value,
a case in which reception of the GNSS signal is interrupted,
a case in which a function requiring a higher degree of precision than a degree of precision of the first correction method is executed on the moving object, or
a case in which a third correction method assigned a higher priority than a priority assigned to the first correction method exists.

4. The method of any one of claims 1 to 3, wherein
the changing of the priority comprises
changing, when the event situation corresponds to the case in which the communication according to the first communication method is unavailable, priorities of the first correction method and other correction methods using the first communication method to lower priorities than a priority of the second correction method using a second communication method.

5. The method of any one of claims 1 to 4, wherein
the changing of the priorities comprises
determining, when the event situation corresponds to the case in which the intensity of the GNSS is reduced to be less than or equal to the preset value, the second correction method in which a minimum required intensity of a GNSS signal is lower than or equal to the reduced intensity of the GNSS signal, and changing the priority of the second correction method to a higher priority than the priority of the first correction method.

6. The method of any one of claims 1 to 5, wherein
the changing of the priorities comprises
determining, when the event situation corresponds to the case in which the function requiring the higher degree of precision than the degree of precision of the first correction method is executed on the moving object, the second correction method having a higher degree of precision than a required degree of precision of the function executed on the moving object, and changing the priority of the second correction method to a higher priority than the priority of the first correction method.

7. The method of any one of claims 1 to 6, wherein
the changing of the priorities comprises
changing, when the event situation corresponds to the case in which the third correction method assigned the higher priority than the priority assigned to the first correction method exists, the priority of the first correction method to a higher priority than the priority of the third correction method.

8. The method of any one of claims 1 to 7,
further comprising
determining, as a threshold correction method, a correction method having a lowest degree of precision among correction methods satisfying the required degree of precision of the function executed on the moving object,
wherein the changing of the priorities comprises
changing the priority of the first correction method to a lower priority than a priority of the threshold correction method.

9. The method of any one of claims 1 to 8, wherein
when the first correction method corresponds to the threshold correction method, the priority of the first correction method is changed to a higher priority than a priority of a fourth correction method having a lower degree of precision than the degree of precision of the first correction method.

10. The method of any one of claims 1 to 9,
further comprising
switching, when the current position determined according to the second correction method does not correspond to the position information included in the log information, the second correction method to the first correction method based on priorities before the priorities change.

11. The method of any one of claims 1 to 10,
further comprising
changing, when the current position of the moving object corresponds to an area where a preset correction method is available, a priority of the preset correction method to a higher priority than priorities of other correction methods.

12. The method of any one of claims 1 to 11,
further comprising:
selecting, when an event situation occurs, the second correction method based on priorities of the plurality of correction methods before the priorities change; and
determining the current position of the moving object by using the GNSS signal and the second correction data corresponding to the second correction method.

13. The method of any one of claims 1 to 12, wherein
when a degree of precision of the second correction method is higher than the required degree of precision of the function executed on the moving object, the second correction method is selected.

14. A computer-readable recording medium storing a program for executing the method of any one of claims 1 to 13 on a computer.

15. An electronic apparatus 200 for determining a current position of a moving object,
comprising:
a GNSS (global navigation satellite system) module 270 configured to determine the current position of the moving object by using a GNSS signal and correction data;
one or more memories 230 storing at least one instruction; and
one or more processors configured to operate according to the at least one instruction to
select a first correction method from among a plurality of correction methods, wherein priorities are assigned to the plurality of correction methods,
provide first correction data corresponding to the first correction method to the GNSS module 270,
store, when an event situation related to the first correction method has occurred, log information including position information about a position where the event situation has occurred in the one or more memories 230,
change, when the current position of the moving object corresponds to the position information included in the log information after the log information is stored, a priority assigned to at least one of the plurality of correction methods,
select, based on the changed priority, a second correction method from among the plurality of correction methods, and
provide second correction data corresponding to the second correction method to the GNSS module 270,
wherein the GNSS module 270 is configured to
determine the current position of the moving object by using the GNSS signal and the first correction data or the second correction data provided from the one or more processors.
